# EUROPÄISCHE PATENTSCHRIFT

(11) **EP 4 370 809 B1**
(45) Veröffentlichungstag und Bekanntmachung des Hinweises auf die Patenterteilung: **25.06.2025**
(21) Anmeldenummer: 22741320.0
(22) Anmeldetag: 14.07.2022
(51) Int. Cl.: F16F 9/02, F16F 9/32

(54) **GASDRUCKFEDER MIT TEMPERATURAUSGLEICH, VERFAHREN ZUR HERSTELLUNG DER GASDRUCKFEDER**
GAS PRESSURE SPRING WITH TEMPERATURE COMPENSATION, AND METHOD FOR PRODUCING THE GAS PRESSURE SPRING
RESSORT PNEUMATIQUE AVEC COMPENSATION THERMIQUE, ET PROCÉDÉ DE PRODUCTION DU RESSORT PNEUMATIQUE

(30) Priorität: 16.07.2021 DE 102021118492; 27.09.2021 DE 102021124843
(43) Veröffentlichungstag der Anmeldung: 22.05.2024
(73) Patentinhaber: STABILUS GmbH, 56070 Koblenz (DE)
(72) Erfinder: PROBST, Ulrich, 56204 Hillscheid (DE); BEIB, Felix, 56070 Koblenz (DE); REISER, Alexander, 56294 Münstermaifeld (DE); UNKELBACH, Nico, 56584 Rüscheid (DE); SEUS-KAPELLEN, Andreas, 56154 Boppard-Udenhausen (DE); LISCHETZKI, Christoph, 56626 Andernach (DE); SCHNEIDER, Michael, 56299 Ochtendung (DE)
(74) Vertreter: Bernsmann, Falk
(86) Internationale Anmeldenummer: PCT/EP2022/069788
(87) Internationale Veröffentlichungsnummer: WO 2023/285615

(56) Entgegenhaltungen:
- EP-A2- 1 795 777
- CN-U- 208 331 091
- DE-A1- 3 141 295

## Beschreibung

### Technisches Gebiet

Die Erfindung betrifft eine Gasdruckfeder gemäß dem Oberbegriff des Anspruchs 1 und ein Verfahren zur Herstellung der Gasdruckfeder.

### Stand der Technik

Aus dem Stand der Technik, sind Gasdruckfedern bekannt, bei denen eine Temperaturabhängigkeit der Federkraft durch ein Ausgleichsmedium ausgeglichen werden soll.

Die Druckschrift EP 1 795 777 A2 beschreibt eine Gasfeder mit einem Arbeitszylinder, in dem ein Arbeitskolben verschiebbar geführt ist. Der zwischen dem Arbeitszylinder und einem Ausgleichszylinder gebildete Ringraum ist mit einem Ausgleichsmedium gefüllt, das sich bei Temperaturerhöhung ausdehnt. Das einem Kolbenaustrittsende entgegengesetzte, offene Ende des Arbeitszylinders ist mittels eines topfförmigen Ausgleichskolbens verschlossen. Wenn sich das Ausgleichsmedium ausdehnt, verschiebt es den Ausgleichskolben so, dass sich das Volumen des Arbeitszylinders vergrößert.

Die Druckschrift DE 31 41 295 A1 betrifft eine Gasfeder, die aus einem Behälter besteht, an dessen Innenwand ein mit der Kolbenstange verbundener Kolben gleitet. Ein mit Ausdehnungsstoff gefüllter Raum befindet sich zwischen einer behälterfesten Trennwand und einem Scheibenkolben, wobei dieser Scheibenkolben eine bewegliche Trennwand für den mit Ausdehnungsstoff gefüllten Raum darstellt. Die Gasfeder umfasst ferner einen Arbeitsraum mit einer unter Druck stehenden Gasfüllung. Bei Temperaturerhöhung dehnt sich der Ausdehnungsstoff aus und bewirkt, dass sich der Scheibenkolben von der behälterfesten Trennwand weiter entfernt, wodurch der Arbeitsraum vergrößert wird.

Bekannte Gasdruckfedern mit Temperaturausgleich sind in der Regel kompliziert aufgebaut, beanspruchen einen deutlich größeren Bauraum als Gasdruckfedern ohne Temperaturausgleich oder können die Temperaturabhängigkeit nicht über den ganzen anwendungsrelevanten Temperaturbereich ausgleichen.

### Technische Aufgabe

Die Aufgabe der Erfindung ist es, eine kostengünstige und einfach aufgebaute Gasdruckfeder und ein kostengünstiges und zuverlässiges Verfahren zu deren Herstellung zu schaffen, wobei die Federkraft der Gasdruckfeder über einen möglichst weiten Temperaturbereich von der Temperatur unabhängig ist.

### Technische Lösung

Die vorliegende Erfindung stellt eine Gasdruckfeder gemäß Anspruch 1 bereit, die die technische Aufgabe löst. Ebenso wird die Aufgabe durch ein Verfahren zur Herstellung der Gasdruckfeder gemäß Anspruch 12 gelöst. Vorteilhafte Ausgestaltungen ergeben sich aus den abhängigen Ansprüchen.

Die Gasdruckfeder umfasst einen in einem Arbeitszylinder entlang einer Hubachse über einen Hubbereich verschieblich geführten Arbeitskolben. Der Arbeitskolben ist vorzugsweise relativ zu dem Arbeitszylinder entlang der Hubachse verschieblich. Der Arbeitszylinder ist vorzugsweise hohlzylindrisch geformt und/oder koaxial zur Hubachse angeordnet.

Die Gasdruckfeder umfasst einen den Arbeitszylinder radial zur Hubachse umschließenden Ausgleichszylinder. Der Ausgleichszylinder ist vorzugsweise hohlzylindrisch geformt und/oder koaxial zur Hubachse angeordnet. Der Ausgleichszylinder ist vorzugsweise starr an dem Arbeitszylinder befestigt. Der Ausgleichszylinder ist vorzugsweise einstückig, sodass die Gasdruckfeder besonders einfach herstellbar ist.

Der Arbeitszylinder weist entlang der Hubachse ein offenes Ende auf. "Offen" bedeutet zumindest, dass ein Gas durch das offene Ende ungehindert aus dem Arbeitszylinder austreten und in den Arbeitszylinder eintreten kann. Vorzugsweise ist das offene Ende vollständig offen.

An einem dem offenen Ende entlang der Hubachse gegenüberliegenden Kolbenstangen-Ende des Arbeitszylinders ist vorzugsweise eine an dem Arbeitskolben befestigte Kolbenstange der Gasdruckfeder durch eine Dichtvorrichtung aus dem Arbeitszylinder herausgeführt. Durch die Dichtvorrichtung ist das Kolbenstangen-Ende vorzugsweise für ein Gas geschlossen. "Geschlossen" bedeutet, dass am Kolbenstangen-Ende kein Gas aus dem Arbeitszylinder austreten oder in den Arbeitszylinder eintreten kann.

Der Ausgleichszylinder bildet an dem offenen Ende einen Überstand über den Arbeitszylinder mit einem geschlossenen Ende entlang der Hubachse.

An einem dem geschlossenen Ende entlang der Hubachse gegenüberliegenden Kolbenstangen-Ende des Ausgleichszylinders ist vorzugsweise die Kolbenstange der Gasdruckfeder durch eine Dichtvorrichtung aus dem Ausgleichszylinder herausgeführt. Durch die Dichtvorrichtung ist das Kolbenstangen-Ende vorzugsweise für ein Gas geschlossen.

Die Dichtvorrichtung verschließt vorzugsweise das Kolbenstangen-Ende des Ausgleichszylinders und das Kolbenstangen-Ende des Arbeitszylinders. Die Dichtvorrichtung dient vorzugsweise auch als Führungsvorrichtung zur Führung der Kolbenstange entlang der Hubachse. Der Arbeitszylinder ist vorzugsweise über die Dichtvorrichtung an dem Ausgleichszylinder befestigt.

Die Dichtvorrichtung kann ein, vorzugsweise einstückiges, Befestigungselement, beispielsweise aus Aluminium, umfassen, das an dem Ausgleichszylinder und an dem Arbeitszylinder befestigt, beispielsweise formschlüssig und/oder stoffschlüssig befestigt. insbesondere durch Umformungen des Ausgleichszylinders und/oder des Arbeitszylinders befestigt, ist. Die Dichtvorrichtung kann eine Anzahl von Dichtelementen, beispielsweise Dichtringen, umfassen, die das Befestigungselement der Dichtvorrichtung zum Arbeitszylinder, zum Ausgleichszylinder und/oder zur Kolbenstange abdichten.

Die Dichtvorrichtung kann einen Außenteil, der das Kolbenstangen-Ende des Ausgleichszylinders verschließt, und einen Innenteil, der das Kolbenstangen-Ende des Arbeitszylinders verschließt, umfassen. Der Vorteil dieses zweiteiligen Aufbaus ist, dass der Innenteil wie bei einer fachüblichen Gasdruckfeder ohne Ausgleichszylinder aufgebaut sein kann.

Der Außenteil der Dichtvorrichtung kann zumindest ein Außen-Befestigungselement, beispielsweise eine Hülse, umfassen, das den Ausgleichszylinder, beispielsweise formschlüssig, kraftschlüssig und/oder stoffschlüssig, an dem Arbeitszylinder befestigt. Der Außenteil der Dichtvorrichtung kann zumindest ein Außen-Dichtelement, beispielsweise einen Dichtring, umfassen, das den Arbeitszylinder zum Ausgleichszylinder abdichtet.

Der Innenteil der Dichtvorrichtung kann zumindest ein Führungselement, beispielsweise eine Führungsbuchse, umfassen, das die Kolbenstange entlang der Hubachse führt. Der Innenteil der Dichtvorrichtung kann zumindest ein Innen-Dichtelement, beispielsweise einen Dichtring, umfassen, das den Arbeitszylinder zur Kolbenstange abdichtet.

Zwischen dem Kolbenstangen-Ende des Arbeitszylinders und dem Kolbenstangen-Ende des Ausgleichszylinders kann eine Scheibe, insbesondere eine Metallscheibe mit einer korrosionsgeschützten Oberfläche, angeordnet sein. Die Scheibe kann die Festigkeit der Dichtvorrichtung erhöhen, insbesondere damit die Dichtvorrichtung bei einem Rollschließen des Ausgleichszylinders nicht beschädigt wird. Die Scheibe kann beispielsweise über eine Rastverbindung mit dem Außen-Befestigungselement der Dichtvorrichtung verbunden sein.

Der Ausgleichskolben trennt einen in dem Arbeitszylinder angeordneten Arbeitsraum, einen zwischen dem Arbeitszylinder und dem Ausgleichszylinder angeordneten Ausgleichsraum und einen in dem Überstand angeordneten Rückstellraum, vorzugsweise gasdicht, voneinander.

In dem Ausgleichsraum ist vorzugsweise ein Ausgleichsmedium angeordnet, das den Ausgleichskolben bei Erwärmung des Ausgleichsmediums auf das geschlossene Ende zu verschiebt. Ein Druck des Ausgleichsmediums beträgt beispielsweise von 70 bar bis 350 bar.

Das Ausgleichsmedium umfasst vorzugsweise einen Dehnstoff, insbesondere ein Dehnwachs, besonders bevorzugt ein Gemisch aus einem Dehnwachs und einem Öl. Das Ausgleichsmedium kann insbesondere aus dem Dehnstoff, dem Dehnwachs oder dem Gemisch aus Dehnwachs und Öl bestehen. Das Ausgleichsmedium kann beispielsweise so ausgestaltet sein wie das in der Druckschrift EP 1 795 777 A2 beschriebene Ausgleichsmedium. Das Dehnwachs kann beispielsweise so ausgestaltet sein wie das in der Anmeldung DE 10 2020 113 749 beschriebene Dehnwachs.

In dem Rückstellraum ist vorzugsweise ein Rückstellmittel angeordnet, das den Ausgleichskolben bei Abkühlung des Ausgleichsmediums von dem geschlossenen Ende weg verschiebt.

Das Rückstellmittel umfasst oder ist vorzugsweise ein Rückstellgas, wobei das Rückstellgas bevorzugt das gleiche Gas ist, das als Arbeitsgas den Arbeitsraum füllt. Das Rückstellgas und/oder das Arbeitsgas ist beispielsweise Stickstoff. Das Rückstellmittel kann ein mechanisches Rückstellelement, beispielsweise eine Feder, insbesondere eine Schraubendruckfeder, umfassen oder davon gebildet sein.

Ein Gasdruck des Arbeitsgases beträgt beispielsweise von 20 bar bis 250 bar. Ein Gasdruck des Rückstellgases beträgt beispielsweise von 20 bar bis 350 bar.

Ein radial zur Hubachse gemessener Abstand des Ausgleichszylinders von dem Arbeitszylinder ist vorzugsweise in dem Hubbereich größer als in einem zwischen dem Hubbereich und dem offenen Ende des Arbeitszylinders liegenden Endbereich des Arbeitszylinders.

Der kleinere Abstand im Endbereich bewirkt eine kleinere Querschnittsfläche des Ausgleichsraumes senkrecht zur Hubachse im Endbereich. Dadurch wird der Ausgleichskolben bei einer gegebenen Temperaturerhöhung durch eine Ausdehnung des Ausgleichsmediums weiter zum geschlossenen Ende des Ausgleichszylinders verschoben, sodass der Arbeitsraum stärker vergrößert wird, und eine stärkere Kompensation der Temperaturabhängigkeit der Federkraft der Gasdruckfeder stattfindet.

Da der Abstand im Hubbereich nicht verkleinert ist, kann der Ausgleichsraum insgesamt noch eine für einen wirksame Temperaturkompensation ausreichende Menge an Ausgleichsmedium aufnehmen.

Den Abstand im Hubbereich und im Endbereich voneinander unterschiedlich zu gestalten, hat den Nachteil, dass dadurch die Herstellung der Gasdruckfeder aufwändiger wird. Außerdem kann es in einem Übergangsbereich zwischen dem Hubbereich und dem Endbereich zu einer Materialschwächung durch eine Umformung des Arbeitszylinders und/oder Ausgleichszylinders oder zu Undichtigkeiten durch Verbindungsstellen zwischen Teilen das Arbeitszylinders und/oder Ausgleichszylinders kommen. Somit könnte der unterschiedliche Abstand eine zuverlässige Funktion der Gasdruckfeder gefährden.

Der Abstand ist beispielsweise im Endbereich um 10 % bis 50 %, bevorzugt um 20 % bis 40 %, besonders bevorzugt um 30 %, kleiner als im Hubbereich. Der Abstand beträgt beispielsweise im Endbereich 1 mm bis 8 mm, bevorzugt 2 mm bis 4 mm, besonders bevorzugt 2,5 mm. Der Abstand beträgt beispielsweise im Hubbereich 2 mm bis 12 mm, bevorzugt 3 mm bis 6 mm, besonders bevorzugt 3 mm bis 3,5 mm. Mit den genannten Werten des Abstands kann über einen typischen Einsatz-Temperaturbereich der Gasdruckfeder, beispielsweise von -10 °C bis +60 °C, eine weitgehende, insbesondere vollständige, Kompensation der Temperaturabhängigkeit der Federkraft der Gasdruckfeder erreicht werden.

Vorzugsweise ist der Abstand des Ausgleichszylinders von dem Arbeitszylinder in dem Endbereich und/oder in dem Hubbereich jeweils unabhängig von einer Position entlang der Hubachse. Der Abstand ist in dieser Ausgestaltung im Endbereich und/oder im Hubbereich jeweils entlang der Hubachse konstant, wodurch die Gasdruckfeder besonders einfach herstellbar ist.

### Beschreibung der Ausführungsarten

Ein radial zur Hubachse gemessener Endbereichs-Außendurchmesser des Arbeitszylinders ist in dem Endbereich des Arbeitszylinders vorzugsweise größer als ein radial zur Hubachse gemessener Hubbereichs-Außendurchmesser des Arbeitszylinders in dem Hubbereich. Eine solche Aufweitung des Arbeitszylinders im Endbereich bewirkt einen verringerten Abstand zwischen Arbeitszylinder und Ausgleichszylinder ohne Veränderung des Ausgleichszylinders oder der Form des Arbeitszylinders im Hubbereich. Somit wird der verringerte Abstand mit möglichst wenigen Änderungen gegenüber einer Gasdruckfeder aus dem Stand der Technik erreicht. Die Gasdruckfeder ist damit besonders einfach und kostengünstig, insbesondere unter Verwendung bekannter Komponenten und Verfahren, herstellbar.

Der Endbereichs-Außendurchmesser des Arbeitszylinders beträgt vorzugsweise von 101 % bis 150 %, bevorzugt von 105 % bis 130 %, besonders bevorzugt von 110 % bis 120 %, meist bevorzugt 112 % bis 113 %, des Hubbereichs-Außendurchmessers des Arbeitszylinders. Der Endbereichs-Außendurchmesser beträgt beispielsweise von 15 mm bis 25 mm, bevorzugt von 16 mm bis 22 mm, besonders bevorzugt von 18 mm bis 21 mm. Der Hubbereichs-Außendurchmesser beträgt beispielsweise von 10 mm bis 20 mm, bevorzugt von 15 mm bis 19 mm, besonders bevorzugt 17 mm bis 18 mm. Mit den genannten Werten der Außendurchmesser kann über einen typischen Einsatz-Temperaturbereich der Gasdruckfeder eine weitgehende Kompensation der Temperaturabhängigkeit der Federkraft der Gasdruckfeder erreicht werden.

Vorzugsweise ist der Außendurchmesser des Arbeitszylinders in dem Endbereich und/oder in dem Hubbereich jeweils unabhängig von einer Position entlang der Hubachse. Der Außendurchmesser ist in dieser Ausgestaltung im Endbereich und/oder im Hubbereich jeweils entlang der Hubachse konstant, wodurch die Gasdruckfeder besonders einfach herstellbar ist.

Ein radial zur Hubachse gemessener Ausgleichszylinder-Innendurchmesser des Ausgleichszylinders beträgt vorzugsweise von 110 % bis 200 %, bevorzugt von 140 % bis 170 %, besonders bevorzugt von 150 % bis 160 %, meist bevorzugt 155 % bis 157 %, des Hubbereichs-Außendurchmessers des Arbeitszylinders. Der Ausgleichszylinder-Innendurchmesser beträgt beispielsweise von 20 mm bis 30 mm, bevorzugt von 23 mm bis 27 mm, besonders bevorzugt 25 mm. Mit den genannten Werten des Ausgleichszylinder-Innendurchmessers kann über einen typischen Einsatz-Temperaturbereich der Gasdruckfeder eine weitgehende Kompensation der Temperaturabhängigkeit der Federkraft der Gasdruckfeder erreicht werden.

Vorzugsweise ist der Innendurchmesser des Ausgleichszylinders unabhängig von einer Position entlang der Hubachse. Der Innendurchmesser des Ausgleichszylinders ist in dieser Ausgestaltung entlang der Hubachse konstant, wodurch die Gasdruckfeder besonders einfach herstellbar ist.

Der Hubbereich und der Endbereich des Arbeitszylinders sind vorzugsweise einstückig miteinander verbunden, sodass die Gasdruckfeder besonders einfach herstellbar ist. Beispielsweise kann der Arbeitszylinder in dem Endbereich quer zur Hubachse relativ zum Hubbereich aufgeweitet sein.

Der Hubbereich und der Endbereich können beispielsweise stoffschlüssig miteinander verbunden, insbesondere miteinander verschweißt, verlötet und/oder verklebt, sein. Der Hubbereich und der Endbereich können beispielsweise formschlüssig und/oder kraftschlüssig miteinander verbunden, insbesondere miteinander verschraubt, verrastet und/oder verklemmt, sein.

Der Arbeitszylinder kann beispielsweise ein Metall, insbesondere einen Stahl, und/oder einen Kunststoff umfassen oder daraus bestehen.

Eine Wandstärke des Arbeitszylinders radial zur Hubachse ist vorzugsweise im Hubbereich und im Endbereich des Arbeitszylinders gleich. Die Wandstärke gilt insbesondere als gleich, wenn sie bis auf eine durch eine Aufweitung des Arbeitszylinders im Endbereich bewirkte Verringerung der Wandstärke, beispielsweise bis auf eine Verringerung um bis zu 0,2 mm, gleich ist. Die Wandstärke ist vorzugsweise unabhängig von einer Position entlang der Hubachse. Die Wandstärke des Arbeitszylinders ist in dieser Ausgestaltung entlang der Hubachse konstant, wodurch die Gasdruckfeder besonders einfach herstellbar ist.

Eine Wandstärke des Ausgleichszylinders radial zur Hubachse ist vorzugsweise unabhängig von einer Position entlang der Hubachse. Die Wandstärke des Ausgleichszylinders ist in dieser Ausgestaltung entlang der Hubachse konstant, wodurch die Gasdruckfeder besonders einfach herstellbar ist.

Der Ausgleichskolben ist vorzugsweise einstückig, sodass die Gasdruckfeder besonders einfach herstellbar ist.

Der Ausgleichskolben umfasst bevorzugt Aluminium oder einen Kunststoff. Besonders bevorzugt besteht der Ausgleichskolben aus Aluminium oder einem Kunststoff.

Der Ausgleichskolben ist vorzugsweise hohlzylindrisch geformt und insbesondere koaxial zur Hubachse angeordnet.

Der Ausgleichskolben weist vorzugsweise an einer Unterseite des Ausgleichskolbens einen Zylinderboden auf. Der Zylinderboden ist vorzugsweise senkrecht zur Hubachse ausgerichtet und/oder geschlossen.

Der Ausgleichskolben umfasst vorzugsweise einen um die Hubachse umlaufenden Zylindermantel. Der Zylindermantel ist vorzugsweise geschlossen.

Der Ausgleichskolben ist an einer dem Zylinderboden entlang der Hubachse gegenüberliegenden Oberseite des Ausgleichskolbens offen. Daraus ergibt sich der Vorteil, dass das Innere des Ausgleichskolbens als Teil des Arbeitsraums oder des Rückstellraums dienen kann, sodass die Gasdruckfeder besonders kompakt aufgebaut sein kann.

Der Ausgleichskolben ist vorzugsweise topfförmig, wobei der Zylinderboden einem Topfboden entspricht und der Zylindermantel einer Topfwand.

Ein hohlzylindrischer oder topfförmiger Ausgleichskolben hat die Vorteile, dass er den Arbeitsraum, den Ausgleichsraum und den Rückstellraum mit einer besonders geringen Masse voneinander trennen kann.

An dem Ausgleichskolben ist vorzugsweise eine den Ausgleichskolben zum Ausgleichszylinder, insbesondere gasdicht, abdichtende Ausgleichszylinderdichtung angeordnet. Die Ausgleichszylinderdichtung kann an dem Ausgleichskolben befestigt sein. Die Ausgleichszylinderdichtung kann einen, insbesondere koaxial, um die Hubachse umlaufenden Dichtring, insbesondere einen O-Ring, umfassen oder davon gebildet sein.

Der Ausgleichskolben umfasst vorzugsweise eine, bevorzugt an die Oberseite angrenzende, radial zur Hubachse nach außen über den Zylindermantel überstehende Zylinderkrempe, wobei an der Zylinderkrempe die Ausgleichszylinderdichtung angeordnet, insbesondere befestigt, ist. Mit Hilfe der Zylinderkrempe kann die Ausgleichszylinderdichtung mit geringem Materialaufwand zuverlässig dichtend in Kontakt mit dem Ausgleichszylinder gebracht werden.

Die Oberseite des Ausgleichskolbens ist vorzugsweise zum Rückstellraum offen. Dadurch wird das Innere des Ausgleichskolbens Teil des Rückstellraums, sodass für das Rückstellmittel relativ zum Arbeitsgas mehr Volumen zur Verfügung steht. Mit einem relativ zum Rückstellmittelvolumen kleineren Arbeitsgasvolumen kann die Temperaturabhängigkeit der Federkraft einfacher ausgeglichen werden.

An dem Ausgleichskolben, bevorzugt an dem Zylindermantel des Ausgleichskolbens, oder an dem Arbeitszylinder ist vorzugsweise eine den Ausgleichskolben zum Arbeitszylinder, insbesondere gasdicht, abdichtende Arbeitszylinderdichtung angeordnet, insbesondere befestigt. Die Arbeitszylinderdichtung kann einen, insbesondere koaxial, um die Hubachse umlaufenden Dichtring, insbesondere einen O-Ring, umfassen oder davon gebildet sein.

Der Ausgleichskolben, bevorzugt der Zylindermantel des Ausgleichskolbens und besonders bevorzugt auch der Zylinderboden des Ausgleichskolbens, ist vorzugsweise zumindest abschnittsweise in dem Endbereich des Arbeitszylinders angeordnet. Dadurch wird das Volumen des Ausgleichsraums und/oder des Rückstellraums relativ zum Volumen des Arbeitsraums vergrößert, wodurch eine wirksamere Kompensation der Temperaturabhängigkeit der Federkraft der Gasdruckfeder erreicht wird.

Der Ausgleichskolben ist vorzugsweise vollständig in dem Ausgleichszylinder angeordnet. Daraus ergibt sich der Vorteil, dass sich eine entlang der Hubachse gemessene Länge der Gasdruckfeder nicht ändert, wenn sich der Ausgleichskolben verschiebt. Die Länge der Gasdruckfeder ist somit nicht temperaturabhängig.

Die Gasdruckfeder umfasst vorzugsweise eine Anzahl von, beispielsweise ein, zwei, drei, vier, fünf oder mehr, Stützelementen, wobei die Anzahl von Stützelementen den Arbeitszylinder an dem Ausgleichszylinder abstützt. Die Stützelemente verhindern vorteilhafterweise Relativbewegungen des Arbeitszylinders relativ zu dem Ausgleichszylinder, die eine Abdichtung des Ausgleichskolbens zum Arbeitszylinder oder zum Ausgleichszylinder oder eine Verschieblichkeit des Ausgleichskolbens entlang der Hubachse beeinträchtigen könnten.

Die Stützelemente sind vorzugsweise um die Hubachse voneinander beabstandet angeordnet, und/oder die Stützelemente weisen vorzugsweise Durchbrechungen entlang der Hubachse auf. Dadurch behindern die Stützelemente eine Expansion oder Kompression eines Ausgleichsmediums in dem Ausgleichsraum entlang der Hubachse zwischen dem Arbeitszylinder und dem Ausgleichszylinder nicht wesentlich.

Die Stützelemente sind vorzugsweise gleichmäßig um die Hubachse verteilt. Dadurch können die Stützelemente den Arbeitszylinder besonders zuverlässig an dem Ausgleichszylinder abstützen.

Die Stützelemente sind vorzugsweise an dem Endbereich des Arbeitszylinders angeordnet. Da der Endbereich an den Ausgleichskolben angrenzt, können die Stützelemente an dem Endbereich besonders wirksam die Abdichtung und Verschieblichkeit des Ausgleichskolbens sicherstellen.

Die Stützelemente können als entlang der Hubachse durchbrochener Ring ausgestaltet sein, der zur Hubachse koaxial angeordnet ist und den Arbeitszylinder mechanisch mit dem Ausgleichszylinder verbindet. Der Ring ist vorzugsweise an dem Hubbereich des Arbeitszylinders angeordnet. An dem Hubbereich behindert der Ring eine Expansion oder Kompression eines Ausgleichsmediums in dem Ausgleichsraum entlang der Hubachse besonders wenig.

Die Anzahl von Stützelementen ist vorzugsweise einstückig mit dem Arbeitszylinder oder mit dem Ausgleichszylinder. Dadurch wird die Anzahl der Bauteile der Gasdruckfeder reduziert, sodass die Gasdruckfeder besonders einfach, schnell und kostengünstig herstellbar ist.

Die Stützelemente können beispielsweise durch Umformungen des Arbeitszylinders und/oder des Ausgleichszylinders gebildet sein. Dadurch können die Stützelemente besonders schnell und einfach gebildet werden. Die Umformungen umfassen beispielsweise Aufweitungen des Arbeitszylinders an den Ausgleichszylinder und/oder, insbesondere punktförmige, Vertiefungen des Ausgleichszylinders an den Arbeitszylinder. Aufgrund des geringen Abstands des Arbeitszylinders von dem Ausgleichszylinder in dem Endbereich können die Stützelemente besonders einfach in dem Endbereich durch die Umformungen gebildet werden.

Das Verfahren zur Herstellung der Gasdruckfeder umfasst vorzugsweise ein Bereitstellen eines Arbeitszylinderrohlings wobei der Arbeitszylinderrohling hohlzylindrisch geformt ist und einen von einer Position entlang seiner Längsachse unabhängigen Außendurchmesser quer zur Längsachse hat. Der Außendurchmesser ist also entlang der Hubachse konstant. Der Arbeitszylinderrohling kann insbesondere ein Arbeitszylinder einer bekannten Gasdruckfeder sein. Der Arbeitszylinderrohling hat vorzugsweise von einem Azimut bezüglich seiner Längsachse abhängige Materialeigenschaften, beispielsweise durch eine Schweißnaht entlang der Längsachse. Ein solcher Arbeitszylinderrohling ist besonders einfach und kostengünstig herstellbar, beispielsweise indem er aus Stahl gezogen und geschweißt wird.

Das Verfahren umfasst vorzugsweise ein Umformen des Arbeitszylinderrohlings zu dem Arbeitszylinder der Gasdruckfeder, wobei das Umformen ein Aufweiten des Außendurchmessers des Arbeitszylinderrohlings in einem Endbereich des Arbeitszylinderrohlings umfasst.

Das Verfahren umfasst vorzugsweise ein Anordnen des Ausgleichskolbens der Gasdruckfeder zumindest abschnittsweise in dem Endbereich des Arbeitszylinders der Gasdruckfeder.

Das Aufweiten umfasst vorzugsweise ein Einführen eines Dorns in den Endbereich und bevorzugt ein Anordnen einer um die Längsachse umlaufende Hülse um den Endbereich des Arbeitszylinderrohlings vor dem Einführen des Dorns, sodass der Endbereich nach dem Aufweiten an der Hülse anliegt. Dadurch lässt sich vorteilhafterweise der Durchmesser eines Arbeitszylinderrohlings, dessen Materialeigenschaften von einem Azimut bezüglich seiner Längsachse abhängig sind, zu einem von dem Azimut unabhängigen Durchmesser aufweiten.

Das Verfahren umfasst vorzugsweise ein Umformen des Arbeitszylinders der Gasdruckfeder und/oder des Ausgleichszylinders der Gasdruckfeder zur Erzeugung einer Anzahl von Stützelementen, wobei die Anzahl von Stützelementen den Arbeitszylinder an dem Ausgleichszylinder abstützt. Die Stützelemente können wie oben beschrieben ausgestaltet sein, woraus sich die dort genannten Vorteile ergeben.

Das Umformen zur Erzeugung der Stützelemente umfasst beispielsweise ein Aufweiten des Arbeitszylinders an den Ausgleichszylinder und/oder ein, insbesondere punktförmiges, Vertiefen des Ausgleichszylinders an den Arbeitszylinder.

Besonders bevorzugt erfolgt das Aufweiten des Arbeitszylinders zur Erzeugung der Stützelemente im gleichen Schritt wie das Aufweiten des Endbereichs des Arbeitszylinderrohlings zu dem Arbeitszylinder. Dazu kann beispielsweise ein Dorn in den Endbereich des Arbeitszylinderrohlings eingeführt werden, wobei der Dorn vorzugsweise eine Anzahl von Vorsprüngen zur Erzeugung der Stützelemente während des Aufweitens des Endbereichs des Arbeitszylinderrohlings zu dem Arbeitszylinder aufweist.

Das Verfahren umfasst vorzugsweise ein Umformen oder eine zerspanende Bearbeitung eines Ausgleichskolbenrohlings zu dem Ausgleichskolben. Ein Umformen erlaubt eine Herstellung des Ausgleichskolbens mit besonders geringem Materialbedarf. Der Ausgleichskolben kann beispielsweise durch Tiefziehen eines Ausgleichskolbenrohlings aus Aluminium hergestellt werden. Der Ausgleichskolben kann beispielsweise durch Umformen aus einem Ausgleichskolbenrohling aus Stahl hergestellt werden.

Der Ausgleichskolbenrohling kann beispielsweise hohlzylindrisch geformt sein. Der hohlzylindrische Ausgleichskolbenrohling kann an einem Ende entlang seiner Längsachse aufgeweitet werden, beispielsweise von einem Innendurchmesser von 18 mm auf einen Innendurchmesser von 23 mm, um eine nach außen vorstehende Zylinderkrempe zu bilden. Der hohlzylindrische Ausgleichskolbenrohling kann an seinem anderen Ende durch Rollschließen und/oder Plasmaschweißen verschlossen werden, um einen geschlossenen Zylinderboden zu bilden. In den Zylindermantel des Ausgleichszylinderrohlings können um seine Längsachse umlaufende Sicken eingerollt werden, um die Ausgleichszylinderdichtung und/oder die Arbeitszylinderdichtung teilweise aufzunehmen.

Der Arbeitszylinder der Gasdruckfeder weist vorzugsweise an einer Innenseite einer Mantelwand des Arbeitszylinders eine Nut auf, durch die ein in dem Arbeitszylinder enthaltenes Gas entlang der Hubachse der Gasdruckfeder an dem Arbeitskolben der Gasdruckfeder vorbei strömen kann.

Eine orthogonal zur Hubachse ausgerichtete Querschnittsfläche der Nut variiert vorzugsweise entlang der Hubachse. Vorzugsweise ist die Querschnittsfläche an den Enden des Hubbereichs des Arbeitszylinders minimal und in einem zentralen Abschnitt zwischen den Enden des Hubbereichs maximal. Dadurch wird an den Enden des Hubbereichs ein höherer Strömungswiderstand auf das Gas bewirkt. Folglich bewirkt die Gasdruckfeder nahe eines maximalen Einschubs der Kolbenstange in die Gasdruckfeder und nahe eines maximalen Ausschubs der Kolbenstange aus der Gasdruckfeder jeweils eine höhere Dämpfkraft als in dazwischen liegenden Positionen der Kolbenstange. Die erhöhte Dämpfkraft nahe des maximalen Einschubs und des maximalen Ausschubs bewirkt, dass eine Bewegung der Kolbenstange dort stärker abgebremst wird, sodass eine Beschädigung der Gasdruckfeder durch Erreichen des maximalen Einschubs oder Ausschubs mit hoher Geschwindigkeit vermieden wird.

Die Querschnittsfläche der Nut variiert vorzugsweise durch eine variable Tiefe der Nut senkrecht zu der Innenseite der Mantelwand des Arbeitszylinders.

In einer, insbesondere für die unten beschriebene Verwendung der Gasdruckfeder in einem Antriebssystem, besonders vorteilhaften Ausgestaltung steigt die Querschnittsfläche der Nut entlang der Hubachse von einem dem Kolbenstangen-Ende des Arbeitszylinders zugewandten Ausschub-Ende des Hubbereichs des Arbeitszylinders in Richtung zum offenen Ende des Arbeitszylinders in einem Ausschub-Übergangsbereich, vorzugsweise linear, an; verläuft in einem sich an den Ausschub -Übergangsbereich anschließenden Zentralbereich konstant, fällt in einem sich an den Zentralbereich anschließenden Einschub-Übergangsbereich, vorzugsweise linear, ab und verläuft in einem sich an den Einschub-Übergangsbereich anschließenden Einschub-Endbereich bis zu einem dem offenen Ende des Arbeitszylinders zugewandten Einschub-Ende des Hubbereichs konstant.

Durch den vorgenannten Verlauf der Querschnittsfläche wird eine hohe Dämpfkraft erreicht, wenn die Kolbenstange in die Gasdruckfeder eingeschoben wird und sich dem maximalen Einschub nähert. Dadurch kann insbesondere verhindert werden, dass sich eine von der Gasdruckfeder unterstützte Klappe zu schnell vollständig schließt, was sonst zu Beschädigungen der Klappe oder Verletzungen eines Bedieners der Klappe führen könnte.

Der Arbeitskolben der Gasdruckfeder umfasst vorzugsweise eine Dichtung, insbesondere einen Dichtring, die den Kolben zu einer Innenseite einer Mantelwand des Arbeitszylinders abdichtet. Die Dichtung ist vorzugsweise so steif, dass sie nicht in eine an der Innenseite der Mantelwand angeordnete Nut eindringt. Dadurch wird verhindert, dass die Dichtung die Nut verschließt, wodurch die Gasdruckfeder blockiert würde.

Die Erfindung betrifft ein Antriebssystem für eine Klappe mit
a. einer erfindungsgemäßen Gasdruckfeder zur Unterstützung der Klappe und
b. einem elektromechanischen Antrieb, beispielsweise einem Linearantrieb, insbesondere einem Spindelantrieb, zum Antrieb der Klappe.

Bei der Klappe kann es sich beispielsweise um eine Klappe eines Fahrzeugs, insbesondere um eine Motorhaube, eine Kofferraumklappe, eine Gepäckraumklappe oder eine Flügeltür, handeln.

Antriebssysteme für eine Klappe mit einer Gasdruckfeder zur Unterstützung der Klappe und einem elektromechanischen Antrieb zum Antrieb der Klappe sind im Stand der Technik bekannt. Bis auf die Verwendung einer erfindungsgemäßen anstelle einer gattungsgemäßen Gasdruckfeder kann das erfindungsgemäße Antriebssystem wie ein entsprechendes Antriebssystem aus dem Stand der Technik, beispielsweise aus DE 103 13 440 A1 oder DE 10 2008 045 903 A1, aufgebaut sein.

Die Gasdruckfeder des Antriebssystems dient dazu, die Klappe in einer beliebigen Stellung gegen die Schwerkraft zu halten, während der elektromechanische Antrieb dazu dient, die Klappe zu öffnen und zu schließen. Zusätzlich kann wie in DE 103 13 440 A1 und DE 10 2008 045 903 A1 eine manuelle Betätigung der Klappe vorgesehen sein.

Die Gasdruckfeder muss eine so hohe Federkraft aufweisen, dass sie die Klappe auch bei niedrigen Umgebungstemperaturen halten kann. Da die Federkraft bei üblichen Gasdruckfedern mit steigender Temperatur steigt, führt dies dazu, dass bei hohen Temperaturen von dem elektromechanischen Antrieb oder einem Bediener eine sehr hohe Kraft aufgebracht werden muss, um die Klappe zu schließen. Daher muss das Antriebssystem einen sehr kraftvollen elektromechanischen Antrieb umfassen, der teuer ist, viel Bauraum beansprucht und im Betrieb viel Energie verbraucht. Außerdem kommt es zu einem hohen Verschleiß des elektromechanischen Antriebs und von anderen mit der Klappe mechanisch verbundenen Teilen, beispielsweise Scharnieren.

Im Stand der Technik werden diese Probleme durch Verwendung eines Federbeins anstelle der Gasdruckfeder umgangen (z.B. DE 10 2008 045 903 A1, Abs. [0021]). Ein Federbein hat zwar eine nahezu temperaturunabhängige Federkraft, ist aber größer, schwerer und teurer als eine Gasdruckfeder mit vergleichbarer Federkraft.

Im Verhältnis eines zur Stützung einer gegebenen Last ausgelegten Federbeins hat eine zur Stützung der gleichen Last ausgelegte Gasdruckfeder aufgrund ihres hohen Gasdrucks eine höhere Dämpfkraft. Das gilt wegen des fluiddynamisch mit zunehmender Einschubgeschwindigkeit der Kolbenstange in die Gasdruckfeder steigenden Strömungswiderstands des Gases der Gasdruckfeder insbesondere für hohe Einschubgeschwindigkeiten. Dadurch bremst eine Gasdruckfeder langsame Bewegungen der Klappe, die bei einer bestimmungsgemäßen Betätigung der Klappe durch den Antrieb auftreten, nur geringfügig ab. Schnelle Bewegungen der Klappe, die beispielsweise auftreten können, wenn die Klappe durch eine Fehlbedienung oder eine Fehlfunktion des Antriebs herabfällt, bremst die Gasdruckfeder hingegen stark ab.

Somit ist das Antriebssystem durch die Verwendung einer Gasdruckfeder anstatt eines Federbeins besonders leicht, kostengünstig, platzsparend und sicher. Durch die Verwendung einer erfindungsgemäßen, temperaturkompensierten Gasdruckfeder anstelle einer fachüblichen Gasdruckfeder werden die vorgenannten Nachteile fachüblicher Gasdruckfedern überkommen.

### Kurze Beschreibung der Zeichnungen

Figur 1 zeigt beispielhaft einen schematischen Längsschnitt entlang der Hubachse einer erfindungsgemäßen Ausgestaltung der Gasdruckfeder.
Figur 2 zeigt einen schematischen Längsschnitt einer alternativen Ausgestaltung der Dichtvorrichtung einer erfindungsgemäßen Gasdruckfeder.
Figur 3 zeigt schematisch einen Verlauf einer Tiefe einer Nut an einer Innenseite einer Mantelwand des Arbeitszylinders einer erfindungsgemäßen Gasdruckfeder.

### Fig.1

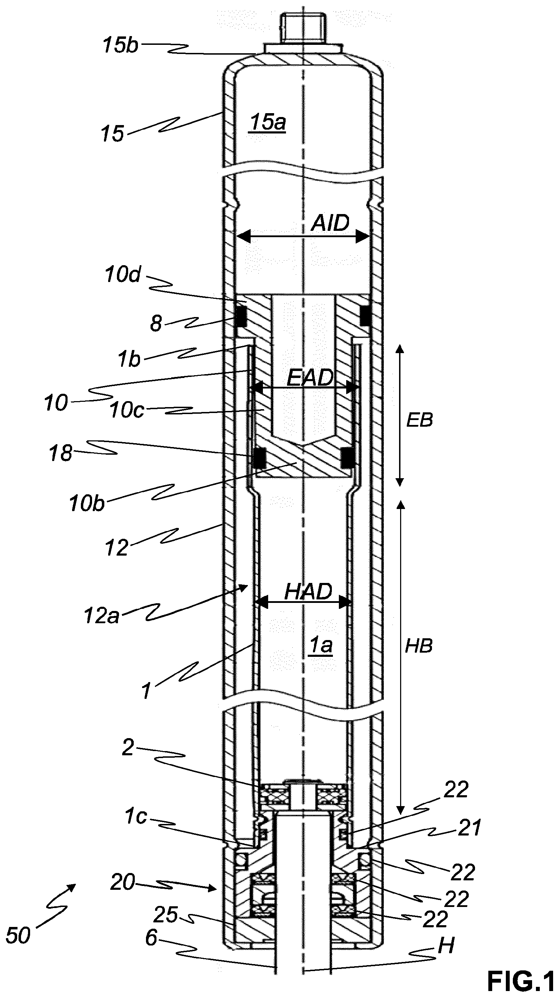

Figur 1 zeigt einen schematischen Längsschnitt entlang der Hubachse H einer erfindungsgemäßen Ausgestaltung der Gasdruckfeder 50.

Die gezeigte Gasdruckfeder 50 umfasst einen in einem Arbeitszylinder 1 entlang einer Hubachse H über einen Hubbereich HB verschieblich geführten Arbeitskolben 2, einen den Arbeitszylinder 1 radial zur Hubachse H umschließenden Ausgleichszylinder 12, und einen in dem Ausgleichszylinder 12 entlang der Hubachse H relativ zu dem Arbeitszylinder 1 und dem Ausgleichszylinder 12 verschieblich geführten und hohlzylindrisch geformten Ausgleichskolben 10.

Der Arbeitszylinder 1 weist entlang der Hubachse H ein offenes Ende 1b auf, wobei der Ausgleichszylinder 12 an dem offenen Ende 1b einen Überstand 15 über den Arbeitszylinder 1 mit einem geschlossenen Ende 15b entlang der Hubachse H bildet.

Der Ausgleichskolben 10 trennt einen in dem Arbeitszylinder 1 angeordneten Arbeitsraum 1a, einen zwischen dem Arbeitszylinder 1 und dem Ausgleichszylinder 12 angeordneten Ausgleichsraum 12a und einen in dem Überstand 15 angeordneten Rückstellraum 15a voneinander.

Der Ausgleichskolben 10 umfasst an einer dem Arbeitsraum 1a zugewandten Unterseite des Ausgleichskolbens 10 einen Zylinderboden 10b und einen um die Hubachse H umlaufenden Zylindermantel 10c. Der Zylinderboden 10b und ein Teil des Zylindermantels 10c sind in dem Arbeitszylinder 1 angeordnet. Der Ausgleichskolben 10 ist an einer dem Rückstellraum 15a zugewandten Oberseite 10a des Ausgleichskolbens 10 offen.

An dem Ausgleichskolben 10 ist eine den Ausgleichskolben 10 zum Ausgleichszylinder 12 abdichtende Ausgleichszylinderdichtung 8 angeordnet.

Der Ausgleichskolben 10 umfasst eine radial zur Hubachse H nach außen über den Zylindermantel 10c überstehende Zylinderkrempe 10d, wobei die Ausgleichszylinderdichtung 8 an der Zylinderkrempe 10d angeordnet ist.

An dem Zylindermantel 10c des Ausgleichskolbens 10 ist eine den Ausgleichskolben 10 zum Arbeitszylinder 1 abdichtende Arbeitszylinderdichtung 18 angeordnet.

An einem dem offenen Ende 1b entlang der Hubachse H gegenüberliegenden Kolbenstangen-Ende 1c des Arbeitszylinders 1 ist eine an dem Arbeitskolben 2 befestigte Kolbenstange 6 durch eine Dichtvorrichtung 20 aus dem Arbeitszylinder 1 herausgeführt.

Die Dichtvorrichtung 20 umfasst ein, beispielsweise einstückig aus Aluminium gefertigtes, Befestigungselement 21, das an dem Ausgleichszylinder 12 und an dem Arbeitszylinder 1, beispielsweise formschlüssig, befestigt, ist. Die Dichtvorrichtung 20 umfasst eine Anzahl von Dichtelementen 22, beispielsweise vier Dichtringe, umfassen, die das Befestigungselement 21 der Dichtvorrichtung 20 zum Arbeitszylinder 1, zum Ausgleichszylinder 12 und zur Kolbenstange 6 abdichten.

Ein radial zur Hubachse H gemessener Abstand des Ausgleichszylinders 12 von dem Arbeitszylinder 1 in dem Hubbereich HB ist größer als in einem zwischen dem Hubbereich HB und dem offenen Ende 1b des Arbeitszylinders 1 liegenden Endbereich EB des Arbeitszylinders 1.

Der im Endbereich EB verkleinerte Abstand kommt dadurch zustande, dass ein radial zur Hubachse H gemessener Endbereichs-Außendurchmesser EAD des Arbeitszylinders 1 größer ist als ein radial zur Hubachse H gemessener Hubbereichs-Außendurchmesser HAD des Arbeitszylinders 1 in dem Hubbereich HB. Der Endbereichs-Außendurchmesser EAD beträgt beispielsweise 18 mm bis 20 mm. Der Hubbereichs-Außendurchmesser HAD beträgt beispielsweise 16 mm.

Ein Ausgleichszylinder-Innendurchmesser AID des Ausgleichszylinders 12 beträgt beispielsweise 25 mm.

### Fig.2

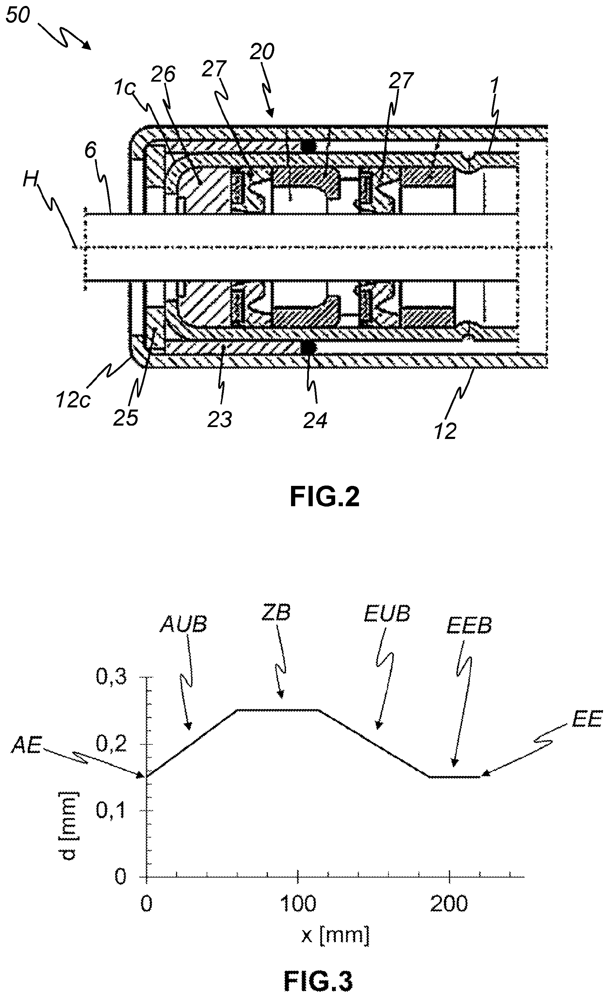

Figur 2 zeigt einen schematischen Längsschnitt entlang der Hubachse H einer alternative Ausgestaltung der Dichtvorrichtung 20 einer erfindungsgemäßen Gasdruckfeder 5.

Die in Figur 2 gezeigte Dichtvorrichtung 20 umfasst einen Außenteil, der das Kolbenstangen-Ende 12c des Ausgleichszylinders 12 verschließt, und einen Innenteil, der das Kolbenstangen-Ende 1c des Arbeitszylinders 1 verschließt.

Der Außenteil der Dichtvorrichtung 20 umfasst ein Außen-Befestigungselement 23, beispielsweise eine Hülse, das den Ausgleichszylinder 12, beispielsweise stoffschlüssig, insbesondere durch einen Klebstoff, an dem Arbeitszylinder 1 befestigt. Der Außenteil der Dichtvorrichtung umfasst ein Außen-Dichtelement 24, beispielsweise einen Dichtring, das den Arbeitszylinder 1 zum Ausgleichszylinder 12 abdichtet.

Der Innenteil der Dichtvorrichtung 20 umfasst ein Führungselement 26, beispielsweise eine Führungsbuchse, das die Kolbenstange 6 der Gasdruckfeder 5 entlang der Hubachse H führt. Der Innenteil der Dichtvorrichtung20 umfasst zumindest ein Innen-Dichtelement 27, beispielsweise ein Dichtring oder zwei Dichtringe, das den Arbeitszylinder 1 zur Kolbenstange 6 abdichtet.

Zwischen dem Kolbenstangen-Ende 1c des Arbeitszylinders 1 und dem Kolbenstangen-Ende 12c des Ausgleichszylinders 12 ist beispielsweise eine Scheibe 25, insbesondere eine Metallscheibe mit einer korrosionsgeschützten Oberfläche, angeordnet.

### Fig.3

Figur 3 zeigt schematisch einen Verlauf einer Tiefe d einer Nut an einer Innenseite einer Mantelwand des Arbeitszylinders einer erfindungsgemäßen Gasdruckfeder abhängig von einer Position x entlang der Hubachse der Gasdruckfeder.

Im dargestellten Beispiel steigt die Tiefe der Nut entlang der Hubachse von einem dem Kolbenstangen-Ende des Arbeitszylinders zugewandten Ausschub-Ende AE des Hubbereichs des Arbeitszylinders in Richtung zum offenen Ende des Arbeitszylinders in einem Ausschub-Übergangsbereich AUB linear an; verläuft in einem sich an den Ausschub -Übergangsbereich AUB anschließenden Zentralbereich ZB konstant, fällt in einem sich an den Zentralbereich ZB anschließenden Einschub-Übergangsbereich EUB linear ab und verläuft in einem sich an den Einschub-Übergangsbereich EUB anschließenden Einschub-Endbereich EEB bis zu einem dem offenen Ende des Arbeitszylinders zugewandten Einschub-Ende EE des Hubbereichs konstant.

**Liste der Bezugszeichen**

| | | | |
|---|---|---|---|
| 1 | Arbeitszylinder | 23 | Außen-Befestigungselement |
| 1a | Innerer Arbeitsraum | 24 | Außen-Dichtelement |
| 1b | offenes Ende | 25 | Scheibe |
| 1c | Kolbenstangen-Ende | 26 | Führungselement |
| 2 | Arbeitskolben | 27 | Innen-Dichtelement |
| 6 | Kolbenstange | 50 | Gasdruckfeder |
| 8 | Ausgleichszylinderdichtung | | |
| 10 | Ausgleichskolben | AE | Ausschub-Ende |
| 10b | Zylinderboden | AID | Ausgleichszylinder-Innendurchmesser |
| 10c | Zylindermantel | AUB | Ausschub-Übergangsbereich |
| 10d | Zylinderkrempe | d | Tiefe |
| 12 | Ausgleichszylinder | EAD | Endbereichs-Außendurchmesser |
| 12a | Ausgleichsraum | EB | Endbereich |
| 12c | Kolbenstangen-Ende | EE | Einschub-Ende |
| 15 | Überstand | EEB | Einschub-Endbereich |
| 15a | Rückstellraum | EUB | Einschub-Übergangsbereich |
| 15b | geschlossenes Ende | H | Hubachse |
| 18 | Arbeitszylinderdichtung | HAD | Hubbereichs-Außendurchmesser |
| 20 | Dichtvorrichtung | HB | Hubbereich |
| 21 | Befestigungselement | x | Position entlang der Hubachse |
| 22 | Dichtelement | ZB | Zentralbereich |

## Patentansprüche

1. Gasdruckfeder (50), umfassend
a. einen in einem Arbeitszylinder (1) entlang einer Hubachse (H) über einen Hubbereich (HB) verschieblich geführten Arbeitskolben (2),
b. einen den Arbeitszylinder (1) radial zur Hubachse (H) umschließenden Ausgleichszylinder (12), und
c. einen in dem Ausgleichszylinder (12) entlang der Hubachse (H) verschieblich geführten Ausgleichskolben (10),
d. wobei der Arbeitszylinder (1) entlang der Hubachse (H) ein offenes Ende (1b) aufweist,
e. wobei der Ausgleichszylinder (12) an dem offenen Ende (1b) einen Überstand (15) über den Arbeitszylinder (1) mit einem geschlossenen Ende (15b) entlang der Hubachse (H) bildet,
f. wobei der Ausgleichskolben (10) einen in dem Arbeitszylinder (1) angeordneten Arbeitsraum (1a), einen zwischen dem Arbeitszylinder (1) und dem Ausgleichszylinder (12) angeordneten Ausgleichsraum (12a) und einen in dem Überstand (15) angeordneten Rückstellraum (15a) voneinander trennt,
g. wobei ein radial zur Hubachse (H) gemessener Abstand des Ausgleichszylinders (12) von dem Arbeitszylinder (1) in dem Hubbereich (HB) größer ist als in einem zwischen dem Hubbereich (HB) und dem offenen Ende (1b) des Arbeitszylinders (1) liegenden Endbereich (EB) des Arbeitszylinders (1),
**dadurch gekennzeichnet, dass**
h. der Ausgleichskolben (10) zumindest abschnittsweise in dem Endbereich (EB) des Arbeitszylinders (1) angeordnet ist.

2. Gasdruckfeder (50) nach Anspruch 1,
**dadurch gekennzeichnet, dass**
eine Wandstärke (WS) des Arbeitszylinders (1) radial zur Hubachse (H) im Hubbereich (HB) und im Endbereich (EB) des Arbeitszylinders (1) gleich ist.

3. Gasdruckfeder (50) nach einem der Ansprüche 1 bis 2,
**dadurch gekennzeichnet, dass**
der Ausgleichskolben (10) einstückig ist.

4. Gasdruckfeder (50) nach einem der Ansprüche 1 bis 3,
**dadurch gekennzeichnet, dass**
der Ausgleichskolben (10) Aluminium oder einen Kunststoff umfasst.

5. Gasdruckfeder (50) nach einem der Ansprüche 1 bis 4,
**dadurch gekennzeichnet, dass**
der Ausgleichskolben (10) hohlzylindrisch geformt ist, wobei der Ausgleichskolben (10)
a. an einer Unterseite des Ausgleichskolbens (10) einen geschlossenen Zylinderboden (10b) umfasst,
b. einen um die Hubachse (H) umlaufenden Zylindermantel (10c) umfasst,
c. an einer dem Zylinderboden (10b) entlang der Hubachse (H) gegenüberliegenden Oberseite des Ausgleichskolbens (10) offen ist und
d. wobei an dem Ausgleichskolben (10) eine den Ausgleichskolben (10) zum Ausgleichszylinder (12) abdichtende Ausgleichszylinderdichtung (8) angeordnet ist.

6. Gasdruckfeder (50) nach Anspruch 5,
**dadurch gekennzeichnet, dass**
der Ausgleichskolben (10)
a. eine radial zur Hubachse (H) nach außen über den Zylindermantel (10c) überstehende Zylinderkrempe (10d) umfasst,
b. wobei die Ausgleichszylinderdichtung (8) an der Zylinderkrempe (10d) angeordnet ist.

7. Gasdruckfeder (50) nach einem der Ansprüche 5 bis 6,
**dadurch gekennzeichnet, dass**
die Oberseite des Ausgleichskolbens (10) zum Rückstellraum (15a) offen ist.

8. Gasdruckfeder (50) nach einem der Ansprüche 1 bis 7,
**dadurch gekennzeichnet, dass**
an dem Ausgleichskolben (10) eine den Ausgleichskolben (10) zum Arbeitszylinder (1) abdichtende Arbeitszylinderdichtung (18) angeordnet ist.

9. Gasdruckfeder (50) nach einem der Ansprüche 1 bis 8,
**dadurch gekennzeichnet, dass**
die Gasdruckfeder (50) eine Anzahl von Stützelementen umfasst, wobei die Anzahl von Stützelementen den Arbeitszylinder (1) an dem Ausgleichszylinder (12) abstützt.

10. Gasdruckfeder (50) nach Anspruch 9,
**dadurch gekennzeichnet, dass**
die Anzahl von Stützelementen einstückig mit dem Arbeitszylinder (1) oder mit dem Ausgleichszylinder (12) ist.

11. Gasdruckfeder (50) nach einem der Ansprüche 1 bis 10,
**dadurch gekennzeichnet, dass**
der Ausgleichskolben (10) vollständig in dem Ausgleichszylinder (12) angeordnet ist.

12. Verfahren zur Herstellung der Gasdruckfeder (50) nach einem der Ansprüche 1 bis 11,
**gekennzeichnet durch folgende Schritte:**
a. Bereitstellen eines Arbeitszylinderrohlings, wobei der Arbeitszylinderrohling hohlzylindrisch geformt ist und einen von einer Position entlang seiner Längsachse unabhängigen Außendurchmesser quer zur Längsachse hat,
b. Umformen des Arbeitszylinderrohlings zu dem Arbeitszylinder (1) der Gasdruckfeder (50), wobei das Umformen ein Aufweiten des Außendurchmessers des Arbeitszylinderrohlings in einem Endbereich des Arbeitszylinderrohlings umfasst, und
c. Anordnen des Ausgleichskolbens (10) der Gasdruckfeder (50) zumindest abschnittsweise in dem Endbereich (EB) des Arbeitszylinders (1) der Gasdruckfeder (50).

13. Verfahren nach Anspruch 12,
**dadurch gekennzeichnet, dass**
das Aufweiten ein Einführen eines Dorns in den Endbereich und bevorzugt ein Anordnen einer um die Längsachse umlaufende Hülse um den Endbereich vor dem Einführen des Dorns umfasst, sodass der Endbereich nach dem Aufweiten an der Hülse anliegt.

14. Verfahren nach einem der Ansprüche 12 bis 13,
**gekennzeichnet durch folgenden Schritt:**
Umformen des Arbeitszylinders (1) der Gasdruckfeder (50) und/oder des Ausgleichszylinders (12) der Gasdruckfeder (50) zur Erzeugung einer Anzahl von Stützelementen, wobei die Anzahl von Stützelementen den Arbeitszylinder (1) an dem Ausgleichszylinder (12) abstützt.

15. Antriebssystem für eine Klappe mit
a. einer Gasdruckfeder (50) nach einem der Ansprüche 1 bis 11 zur Unterstützung der Klappe und
b. einem elektromechanischen Antrieb, bevorzugt einem Spindelantrieb, zum Antrieb der Klappe.

## Claims

1. A gas pressure spring (50), comprising
a. a working piston (2) which is displaceably guided in a working cylinder (1) along a stroke axis (H) over a stroke range (HB),
b. a compensating cylinder (12) surrounding the working cylinder (1) radially to the stroke axis (H), and
c. a compensating piston (10) which is displaceably guided in the compensating cylinder (12) along the stroke axis (H),
d. wherein the working cylinder (1) has an open end (1b) along the stroke axis (H),
e. wherein the compensating cylinder (12) forms a projection (15) along the stroke axis (H) beyond the working cylinder (1) at the open end (1b), the projection (15) having a closed end (15b),
f. wherein the compensating piston (10) separates a working chamber (1a) arranged in the working cylinder (1), a compensating chamber (12a) arranged between the working cylinder (1) and the compensating cylinder (12) and a restoring chamber (15a) arranged in the projection (15) from one another,
g. wherein a distance of the compensating cylinder (12) from the working cylinder (1) measured radially to the stroke axis (H) is greater in the stroke range (HB) than in an end region (EB) of the working cylinder (1) lying between the stroke range (HB) and the open end (1b) of the working cylinder (1),
**characterized in that**
h. the compensating piston (10) is arranged at least in sections in the end region (EB) of the working cylinder (1).

2. The gas pressure spring (50) according to claim 1,
**characterized in that**
a wall thickness (WS) of the working cylinder (1) measured radially to the stroke axis (H) is the same in the stroke range (HB) and in the end range (EB) of the working cylinder (1).

3. The gas pressure spring (50) according to one of claims 1 to 2,
**characterized in that**
the compensating piston (10) is in one piece.

4. The gas pressure spring (50) according to one of claims 1 to 3,
**characterized in that**
the compensating piston (10) comprises aluminium or a plastic.

5. The gas pressure spring (50) according to one of claims 1 to 4,
**characterized in that**
the compensating piston (10) is hollow cylindrical in shape, wherein the compensating piston (10)
a. comprises a closed cylinder base (10b) at an underside of the compensating piston (10),
b. comprises a cylinder jacket (10c) arranged around the stroke axis (H), and
c. is open on an upper side of the compensating piston (10) being arranged opposite the cylinder base (10b) along the stroke axis (H),
d. wherein a compensating cylinder seal (8) sealing the compensating piston (10) to the compensating cylinder (12) is arranged on the compensating piston (10).

6. The gas pressure spring (50) according to claim 5,
**characterized in that**
a. the compensating piston (10) comprises a cylinder brim (10d) projecting radially to the stroke axis (H) outwards over the cylinder jacket (10c),
b. wherein the compensating cylinder seal (8) is arranged on the cylinder brim (10d).

7. The gas pressure spring (50) according to one of claims 5 to 6,
**characterized in that**
the upper side of the compensating piston (10) is open to the restoring chamber (15a).

8. The gas pressure spring (50) according to one of claims 1 to 7,
**characterized in that**
a working cylinder seal (18) sealing the compensating piston (10) to the working cylinder (1) is arranged on the compensating piston (10).

9. The gas pressure spring (50) according to one of claims 1 to 8,
**characterized in that**
the gas pressure spring (50) comprises a number of support elements, the number of support elements supporting the working cylinder (1) on the compensating cylinder (12).

10. The gas pressure spring (50) according to claim 9,
**characterized in that**
the number of support elements is integral with the working cylinder (1) or with the compensating cylinder (12).

11. The gas pressure spring (50) according to one of claims 1 to 10,
**characterized in that**
the compensating piston (10) is arranged completely in the compensating cylinder (12).

12. A method for producing a gas pressure spring (50) according to one of claims 1 to 11,
**characterized by** the following steps:
a. providing a working cylinder blank, wherein the working cylinder blank is shaped like a hollow cylinder and has an outer diameter transverse to its longitudinal axis that is independent of a position along the longitudinal axis,
b. forming the working cylinder blank into the working cylinder (1) of the gas pressure spring (50), the forming comprising an expansion of the outer diameter of the working cylinder blank in an end region of the working cylinder blank, and
c. arranging the compensating piston (10) of the gas pressure spring (50) at least in sections in the end region (EB) of the working cylinder (1) of the gas pressure spring (50).

13. The method according to claim 12,
**characterized in that**
the expansion includes inserting a mandrel into the end region and preferably arranging a sleeve around the longitudinal axis around the end region before inserting the mandrel, so that the end region lies against the sleeve after the expansion.

14. The method according to one of claims 12 to 13,
**characterized by** the following step:
forming the working cylinder (1) of the gas pressure spring (50) and/or the compensating cylinder (12) of the gas pressure spring (50) to produce a number of support elements, the number of support elements supporting the working cylinder (1) on the compensating cylinder (12).

15. A drive system for a flap comprising
a. a gas pressure spring (50) according to one of claims 1 to 11 to support the flap and
b. an electromechanical drive, preferably a spindle drive, to drive the flap.

## Revendications

1. Ressort pneumatique (50), comprenant
a. un piston de travail (2) guidé de manière coulissante dans un cylindre de travail (1) le long d'un axe de course (H) sur une zone de course (HB),
b. un cylindre de compensation (12) entourant le cylindre de travail (1) radialement par rapport à l'axe de course (H), et
c. un piston de compensation (10) guidé de manière coulissante dans le cylindre de compensation (12) le long de l'axe de course (H),
d. dans lequel le cylindre de travail (1) présente une extrémité ouverte (1b) le long de l'axe de course (H),
e. le cylindre de compensation (12) formant, à l'extrémité ouverte (1b), un dépassement (15) au-delà du cylindre de travail (1) avec une extrémité fermée (15b) le long de l'axe de course (H),
f. le piston de compensation (10) séparant une chambre de travail (1a) disposée dans le cylindre de travail (1), une chambre de compensation (12a) disposée entre le cylindre de travail (1) et le cylindre de compensation (12) et une chambre de rappel (15a) disposée dans le dépassement (15),
g. une distance du cylindre de compensation (12) par rapport au cylindre de travail (1), mesurée radialement par rapport à l'axe de course (H), étant plus grande dans la zone de course (HB) que dans une zone d'extrémité (EB) du cylindre de travail (1) située entre la zone de course (HB) et l'extrémité ouverte (1b) du cylindre de travail (1),
**caractérisé en ce que**
h. le piston de compensation (10) est disposé au moins par sections dans la zone d'extrémité (EB) du cylindre de travail (1).

2. Ressort pneumatique (50) selon la revendication 1,
**caractérisé en ce que**
une épaisseur de paroi (WS) du cylindre de travail (1) radialement par rapport à l'axe de course (H) est identique dans la zone de course (HB) et dans la zone d'extrémité (EB) du cylindre de travail (1).

3. Ressort pneumatique (50) selon l'une quelconque des revendications 1 à 2,
**caractérisé en ce que**
le piston de compensation (10) est d'une seule pièce.

4. Ressort pneumatique (50) selon l'une quelconque des revendications 1 à 3, **caractérisé en ce que**
le piston de compensation (10) comprend de l'aluminium ou une matière plastique.

5. Ressort pneumatique (50) selon l'une quelconque des revendications 1 à 4,
**caractérisé en ce que**
le piston de compensation (10) est de forme cylindrique creuse, le piston de compensation (10)
a. comprenant un fond de cylindre fermé (10b) sur une face inférieure du piston de compensation (10),
b. comprenant une enveloppe de cylindre (10c) tournant autour de l'axe de course (H), et
c. étant ouvert sur une face supérieure du piston de compensation (10) opposée au fond du cylindre (10b) le long de l'axe de course (H),
d. un joint de cylindre de compensation (8) rendant étanche le piston de compensation (10) par rapport au cylindre de compensation (12) étant disposé sur le piston de compensation (10).

6. Ressort pneumatique (50) selon la revendication 5,
**caractérisé en ce que**
le piston de compensation (10)
a. comprend un rebord de cylindre (10d) dépassant radialement vers l'extérieur par rapport à l'axe de course (H) au-delà de l'enveloppe de cylindre (10c),
b. le joint de cylindre de compensation (8) étant disposé sur le rebord de cylindre (10d).

7. Ressort pneumatique (50) selon l'une quelconque des revendications 5 à 6,
**caractérisé en ce que**
la face supérieure du piston de compensation (10) est ouvert vers la chambre de rappel (15a).

8. Ressort pneumatique (50) selon l'une quelconque des revendications 1 à 7,
**caractérisé en ce que**
un joint de cylindre de travail (18) assurant l'étanchéité du piston de compensation (10) par rapport au cylindre de travail (1) est disposé sur le piston de compensation (10).

9. Ressort pneumatique (50) selon l'une quelconque des revendications 1 à 8,
**caractérisé en ce que**
le ressort pneumatique (50) comprend un nombre d'éléments de soutien, le nombre d'éléments de soutien soutenant le cylindre de travail (1) contre le cylindre de compensation (12).

10. Ressort pneumatique (50) selon la revendication 9,
**caractérisé en ce que**
le nombre d'éléments de soutien est d'une seule pièce avec le cylindre de travail (1) ou avec le cylindre de compensation (12).

11. Ressort pneumatique (50) selon l'une quelconque des revendications 1 à 10,
**caractérisé en ce que**
le piston de compensation (10) est entièrement disposé dans le cylindre de compensation (12).

12. Procédé de fabrication du ressort pneumatique (50) selon l'une des revendications 1 à 11,
**caractérisé par les étapes suivantes** :
a. fournir une ébauche de cylindre de travail, l'ébauche de cylindre de travail étant de forme cylindrique creuse et a un diamètre extérieur transversal à l'axe longitudinal indépendant d'une position le long de son axe longitudinal,
b. déformer l'ébauche de cylindre de travail en ledit cylindre de travail (1) du ressort pneumatique (50), la transformation comprenant un élargissement du diamètre extérieur de l'ébauche de cylindre de travail dans une zone d'extrémité de l'ébauche de cylindre de travail, et
c. agencer le piston de compensation (10) du ressort pneumatique (50) au moins par sections dans la zone d'extrémité (EB) du cylindre de travail (1) du ressort pneumatique (50).

13. Procédé selon la revendication 12,
**caractérisé en ce que**
l'élargissement comprend l'insertion d'un mandrin dans la zone d'extrémité et de préférence la mise en place d'un manchon autour de l'axe longitudinal autour de la zone d'extrémité avant l'insertion du mandrin, de sorte que la zone d'extrémité soit en contact avec le manchon après l'élargissement.

14. Procédé selon l'une quelconque des revendications 12 à 13,
**caractérisé par l'étape suivante :**
déformer le cylindre de travail (1) du ressort pneumatique (50) et/ou le cylindre de compensation (12) du ressort pneumatique (50) pour produire un nombre d'éléments de soutien, le nombre d'éléments de soutien soutenant le cylindre de travail (1) contre le cylindre de compensation (12).

15. Système d'entraînement pour un volet comprenant
a. un ressort pneumatique (50) selon l'une des revendications 1 à 11 pour soutenir le volet et
b. un entraînement électromécanique, de préférence un entraînement à broche, pour l'entraînement du volet.
